# EUROPÄISCHE PATENTSCHRIFT

(11) **EP 1 459 881 B1**
(45) Veröffentlichungstag und Bekanntmachung des Hinweises auf die Patenterteilung: **08.05.2013**
(21) Anmeldenummer: 04006360.4
(22) Anmeldetag: 17.03.2004
(51) Int. Cl.: B29C 44/12, B32B 37/14, B32B 37/00, B29C 70/08, B29C 70/46

(54) **Verfahren zur Herstellung eines Fahrzeug-Karosserieteils**
Method for manufacturing a vehicle body part
Procédé pour la fabrication d'une pièce de carosserie de véhicule

(30) Priorität: 20.03.2003 DE 10312465
(43) Veröffentlichungstag der Anmeldung: 22.09.2004
(60) Teilanmeldung: 10167152.7
(73) Patentinhaber: Webasto AG, 82131 Stockdorf (DE); Bayer MaterialScience AG, 51368 Leverkusen (DE)
(72) Erfinder: Dichtl, Matthias, 82547 Eurasburg (DE); Kiesewetter, Frank, 82110 Germering (DE); Schwaighofer, Ralf, 83115 Neubeuern (DE); Mies, Detlef, 50189 Elsdorf (DE); Lammeck, Adolf, 53797 Lohmar (DE); Paul, Reiner, 42799 Leichlilngen (DE)
(74) Vertreter: advotec.

(56) Entgegenhaltungen:
- DE-A1- 3 908 433
- DE-A1- 10 153 973
- DE-A1- 19 818 829
- DE-A1- 19 955 167
- US-A- 5 238 725
- US-A- 5 271 885
- US-A- 5 837 172
- US-B1- 6 618 944

## Beschreibung

Die Erfindung betrifft ein Verfahren zur Herstellung eines Fahrzeug-Karosserieteils, insbesondere eines Fahrzeugdachs.

Ein als Verbundbauteil ausgeführtes Fahrzeug-Karosserieteil ist beispielsweise aus der DE 199 55 167 A1 bekannt und zum Einsatz als vorgefertigtes Dachmodul ausgelegt. Dieses Fahrzeug-Karosserieteil ist in Sandwich-Bauweise hergestellt und umfasst ein als Außenschale dienendes, erstes Schichtpaket, das formgebend ist und mit einem als Innenschale dienenden, zweiten Schichtpaket verbunden ist. Die Außenschale umfasst eine feste Außenhaut aus Kunststoff, die mit einer als Träger dienenden Hartschaumschicht hinterfüttert ist.

In der Praxis kann es erforderlich sein, dass sich die Dicke bzw. die Geometrie der Hartschaumschicht über die Fläche des Karosserieteils ändert, was beispielsweise erforderlich ist, wenn Anbauteile, wie Haltegriffe, Lampen oder dergleichen, mit dem Karosserieteil verbunden werden sollen.

Die Herstellung eines als Verbundbauteil ausgeführten Fahrzeug-Karosserieteils, das eine Außenhaut und einen Träger umfasst, erfolgt bisher beispielsweise derart, dass eine tiefgezogene Außenhaut, die aus Aluminium, Stahl oder Kunststoff bestehen kann, in eine Form eingelegt wird und dann mittels eines Roboters ein Polyurethan/Glasfaser-Gemisch zur Ausbildung des Trägers in die Form eingetragen wird. Anschließend wird die Form geschlossen. Das Polyurethan/Glasfaser-Gemisch reagiert aus bzw. vernetzt, wodurch es aushärtet und gleichzeitig eine Haftung zu der Außenhaut aufbaut.

Alternativ kann ein als Verbundbauteil ausgebildetes Fahrzeug-Karosserieteil mit einer beispielsweise aus Papier gebildeten Wabenstruktur hergestellt werden, die einen Träger des Verbundbauteils bildet. Dies erfolgt derart, dass wiederum eine tiefgezogene Außenhaut in eine Form eingelegt wird, wobei gleichzeitig ein mit einem Glasvlies oder einer Glasmatte kaschierter, aus der Wabenstruktur gebildeter Kern beidseitig mit Polyurethan besprüht wird. Der besprühte und kaschierte Kern wird in die Form, in die die Außenhaut eingelegt wurde, eingebracht. Die Form wird dann geschlossen. Nun vernetzt das Polyurethan, so dass es sowohl eine Bindung zu der Außenhaut als auch zu dem Kern aufbaut.

Bei den vorstehend beschriebenen Verfahren zur Herstellung eines als Verbundbauteil ausgebildeten Fahrzeug-Karosserieteils besteht das Problem, dass sich Geometrieänderungen bzw. Dickenänderungen sowie Strukturen des Trägers auf der Außenhaut abzeichnen können.

Der Erfindung liegt die Aufgabe zugrunde, ein Verfahren zur Herstellung eines als Verbundbauteil ausgeführten Fahrzeug-Karosserieteils mit einer Außenwand und einem Träger zu schaffen, das eine Außenhaut mit einer homogenen Oberfläche gewährleistet.

Diese Aufgabe ist erfindungsgemäß durch das Verfahren mit den Merkmalen des Patentanspruches 1 gelöst.

Der Kern der Erfindung liegt mithin darin, zur Anbindung des gegebenenfalls Geometrieänderungen, wie Dickenänderungen, aufweisenden Trägers an die Außenhaut den Aufbau des Verbundbauteils mit einer durch die Begrenzungsschicht gebildeten Zwischenschicht zu versehen, mit der die Außenhaut hinterfüttert wird und die ein Abzeichnen der Geometrieänderungen des Trägers an der Außenseite der Außenhaut im wesentlichen unterbindet. Die Herstellung des Trägers für die Außenhaut erfolgt bei dem Verfahren nach der Erfindung in zumindest zwei Schritten, wobei in einem Schritt der Werkstoff für die Begrenzungsschicht aufgetragen und in dem anderen Schritt die Kernstruktur über die Begrenzungsschicht an die Außenhaut angebunden wird. Die Anbindung der Begrenzungsschicht an die Außenhaut erfolgt durch die Vernetzung des die Begrenzungsschicht ausbildenden Werkstoffs.

Zur Herstellung der Begrenzungsschicht wird vorzugsweise ein Polyurethan-Werkstoff ausgewählt, der beim Vernetzen ausschäumt. Bei dem ausgeschäumten Werkstoff kann es sich um einen Hartschaum oder auch ein Material handeln, das energieabsorbierende Eigenschaften aufweist. Letzteres kann insbesondere bei einem Dachmodul zur Dämpfung eines Kopfaufpralls vorteilhaft sein.

Der Polyurethan umfassende Werkstoff wird in der Regel derart verarbeitet, dass ein Zweikomponentensystem in einem externen Mischkopf vermischt wird und das Gemisch anschließend mittels eines Roboters auf die betreffende Fläche aufgetragen wird. Bei Luftkontakt reagiert das System aus, d. h. es vernetzt und härtet aus. Die Reaktionszeit des Systems ist über dessen Zusammensetzung einstellbar und kann beispielsweise zwischen einer Minute und einer halben Stunde betragen. Zweckmäßig ist die Reaktionszeit aber auf etwa eine Minute eingestellt, so dass kurze Taktzeiten an der betreffenden Fertigungsstation gefahren werden können.

Das Verfahren nach der Erfindung eignet sich grundsätzlich zur Herstellung aller äußeren und inneren plattenförmigen Strukturen einer Fahrzeugkarosserie, die als Verbundbauteil ausgeführt sind. Bevorzugt kann mit dem Verfahren nach der Erfindung jedoch ein vorgefertigtes Dachmodul hergestellt werden, das in einen korrespondierend ausgebildeten Dachrahmen eine Fahrzeugkarosserie einsetzbar ist. Es ist auch denkbar, dass das Karosserieteil eine bewegte Fläche, z. B. ein Schiebedach oder eine Lamelle eines Lamellenschiebedachs bildet. Ferner kann der Träger zur Ausbildung eines Dachhimmels an der dem Fahrzeuginnenraum zugewandten Seite mit einem textilen oder folienartigen Material beschichtet sein.

Die Außenhaut des Fahrzeug-Karosserieteils kann aus einem beliebigen Werkstoff, beispielsweise aus Kunststoff, Aluminium oder Stahl, bestehen und ein Tiefziehteil darstellen. Das Verfahren nach der Erfindung eignet sich jedoch insbesondere zur Herstellung eines Fahrzeug-Karosserieteils mit einer Außenhaut aus Kunststoff, an deren Oberfläche sich ohne Begrenzungsschicht Strukturen des Trägers abzeichnen könnten.

Das Verfahren nach der Erfindung kann auf unterschiedliche Art und Weise realisiert werden. So kann die Begrenzungsschicht beispielsweise während der Formgebung der Kernstruktur hergestellt werden. In diesem Falle wird beispielsweise die Außenhaut in die Werkzeugform eingelegt und anschließend der die Begrenzungsschicht ausbildende Werkstoff auf die Innenseite der Außenhaut aufgetragen. Anschließend kann dann eine weitere, die Kernstruktur ausbildende und Polyurethan umfassende Materiallage auf den die Begrenzungsschicht ausbildenden Werkstoff aufgetragen werden. Der die Begrenzungsschicht ausbildende Werkstoff und der für die Kernstruktur eingesetzte Werkstoff sind aus Stabilitätsgründen vorzugsweise Polyurethan/Glasfaser-Gemische, die gleichartig sein oder sich hinsichtlich ihrer Eigenschaften unterscheiden können und beispielsweise nach dem sogenannten LFI(Long Fiber Injection)-Verfahren aufgetragen werden. Der Materialauftrag erfolgt also in zwei Verfahrensschritten. Nach dem Auftragen der beiden Werkstoffschichten wird die Werkzeugform geschlossen, so dass die Außenhaut, die Begrenzungsschicht und die weitere Materiallage durch Aushärten bzw. Vernetzen der Polyurethan/Glasfaser-Werkstoffe miteinander verbunden werden. Das eingesetzte Werkzeug umfasst zweckmäßigerweise einen Oberstempel, dessen Kontur korrespondierend zu der der Außenhaut abgewandten Seite der Kernstruktur ausgebildet ist.

Weitere Vorteile und vorteilhafte Ausgestaltungen des Gegenstandes nach der Erfindung sind der Beschreibung, der Zeichnung und den Patentansprüchen entnehmbar.

Acht Ausführungsbeispiele eines nach dem erfindungsgemäßen Verfahren hergestellten Fahrzeug-Karosserieteils sind in der Zeichnung schematisch vereinfacht dargestellt. Es zeigt
- Fig. 1: eine schematische Teilansicht eines Personenkraftwagens mit einem Dachmodul;
- Fig. 2: einen Schnitt durch ein Dachmodul, das nach dem erfindungsgemäßen Verfahren hergestellt ist;
- Fig. 3a und b: die Herstellung einer weiteren Ausführungsform eines Dachmoduls;

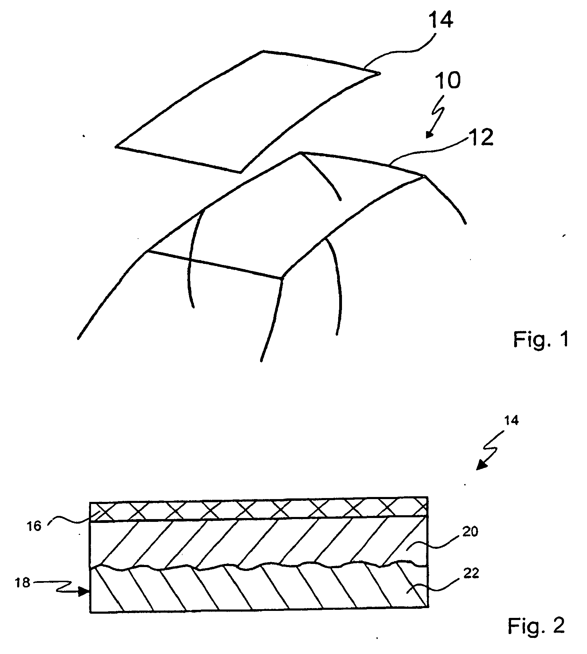

In Fig. 1 ist ein als Personenkraftwagen ausgebildetes Kraftfahrzeug 10 dargestellt, dessen Karosserie einen Dachrahmen 12 aufweist, in den ein nach einem erfindungsgemäßen Verfahren hergestelltes, vormontiertes Dachmodul 14 einsetzbar ist, das einen Fahrzeuginnenraum überdeckt. Die Verbindung zwischen dem Dachmodul 14 und dem Dachrahmen 12 erfolgt über eine hier nicht näher dargestellte, umlaufenden Kleberaupe.

In Fig. 2 ist ein Schnitt durch das in Fig. 1 dargestellte Dachmodul 14 gezeigt, das vor dem Einsetzen in den Dachrahmen 12 vorgefertigt ist.

Das Dachmodul 14, das ein Verbundbauteil darstellt, wird derart hergestellt, dass eine die außenliegende Oberfläche des Dachmoduls 14 bildende Außenhaut 16 in ein Formwerkzeug eingelegt wird, woraufhin eine Trägerstruktur 18 gefertigt wird, und zwar derart, dass in einem ersten Verfahrensschritt eine erste Lage 20 aus einem Polyurethan/Glasfaser-Gemisch und sofort im Anschluss daran in einem zweiten Verfahrensschritt eine zweite Lage 22 aus einem Polyurethan/Glasfaser-Gemisch eingetragen wird. Anschließend wird das Werkzeug geschlossen, woraufhin die beiden Materiallagen 20 und 22 unter Vernetzung ausreagieren bzw. aushärten, so dass die Materiallage 20 eine Begrenzungsschicht bildet, über die die eine Kernstruktur darstellende und die Innenkontur des Dachmoduls 14 bildende Materiallage 22 an die Außenhaut 16 angebunden wird.

Die Polyurethan/Glasfaser-Gemische der beiden Materiallagen 20 und 22 können die gleichen oder auch unterschiedliche Eigenschaften aufweisen.

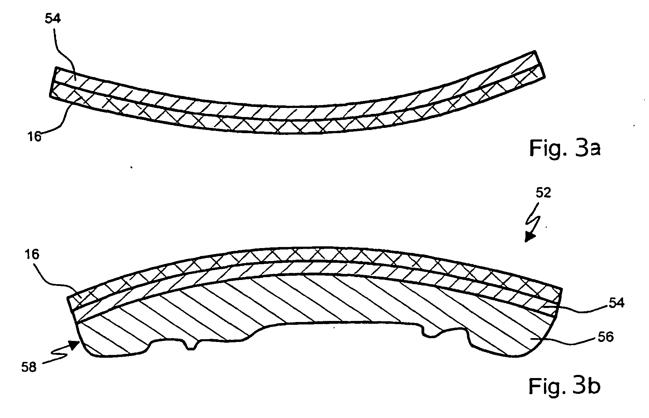

Anhand der Figuren 3a und 3b ist die Herstellung eines weiteren Dachmoduls 52 dargestellt, dessen fertiger Zustand Fig. 3b zu entnehmen ist.

Zur Herstellung des Dachmoduls 52 wird in einem ersten Schritt eine eine Außenhaut bildende Kunststofffolie 16 in eine Werkzeugform eingelegt. Auf die Kunststofffolie 16 wird dann ein Polyurethan/Glasfaser-Gemisch nach einem LFI-Verfahren aufgetragen. Daraufhin wird das Werkzeug mittels eines Oberstempels geschlossen, dessen Kontur im wesentlichen parallel zur Innenkontur der Außenhaut 16 verläuft. Es bildet sich dann durch Vernetzung des Polyurethan/Glasfaser-Gemischs eine Begrenzungsschicht 54 aus (vgl. Fig. 3a). Dann wird das Werkzeug geöffnet, woraufhin ein erneuter Eintrag eines Polyurethan/Glasfaser-Gemisches erfolgt. Das Werkzeug wird dann mittels eines zweiten Oberstempels geschlossen, dessen Kontur mit der Kontur korrespondiert, die eine Kernstruktur 56 aufweist, die aus dem zweiten Polyurethan/Glasfaser-Gemisch gebildet ist. Die Kernstruktur 56 und Begrenzungsschicht 54 bilden einen Träger 58 für die Außenhaut 16.

Bei den zuvor beschriebenen Ausführungsbeispielen, die eine oder mehrere, aus einem Polyurethan/Glasfaser-Gemisch gebildete Schichten aufweisen, kann durch die Einstellung des jeweiligen Glasfasergehalts des weiteren Einfluss auf das Temperaturverhalten des betreffenden Karosserieteils genommen werden.

Bei den Ausführungsbeispielen, die mehrere Schichten aus einem Polyurethan/Glasfaser-Gemisch aufweisen, kann es des weiteren vorteilhaft sein, unterschiedliche Gemischsysteme einzusetzen, um eine gute Anpassung an das vorliegende Anforderungsprofil zu gewährleisten.

### Bezugszeichen

- 10: Kraftfahrzeug
- 12: Dachrahmen
- 14: Dachmodul
- 16: Außenhaut
- 18: Träger
- 20: Begrenzungsschicht
- 22: Kernstruktur
- 52: Dachmodul
- 54: Begrenzungsschicht
- 56: Kernstruktur
- 58: Träger

## Patentansprüche

1. Verfahren zur Herstellung eines Fahrzeug-Karosserieteils (14), insbesondere eines Fahrzeugdachs, das ein Verbundbauteil ist, das eine Außenhaut (16) und einen Träger (18) umfasst, bei welchem Verfahren die Außenhaut (16) in ein Werkzeug eingelegt und dann mit dem Träger (18) verbunden wird, wobei in einer Werkzeugform zur Ausbildung einer Begrenzungsschicht (20) an der Innenseite der Außenhaut (16) ein Polyurethan umfassender Werkstoff angeordnet und vernetzt wird und über die Begrenzungsschicht (20) eine eine Innenkontur des Trägers vorgebende Kernstruktur (22) des Trägers (18) an die Außenhaut (16) angebunden wird, wobei der die die Begrenzungsschicht (20) ausbildende Werkstoff auf die Innenseite der Außenhaut (16) aufgetragen wird und dann eine weitere, die Kemstruktur (22) ausbildende und Polyurethan umfassende Materiallage auf den die Begrenzungsschicht bildenden Werkstoff aufgetragen wird, wobei anschließend die Außenhaut (16), die Begrenzungsschicht (20) und die weitere Materiallage (22) durch Aushärten bzw. Vernetzen der für die Begrenzungsschicht (20) und die weitere Materiallage (22) eingesetzten Werkstoffe miteinander verbunden werden.

## Claims

1. Method for manufacturing a vehicle body part (14), in particular a vehicle roof, which is a composite component comprising an outer skin (16) and a support (18), in which method the outer skin (16) is inserted into a mould and then joined to the support (18), wherein a polyurethane-comprising material is arranged and crosslinked in a mould for forming a boundary layer (20) on the inner side of the outer skin (16), and a core structure (22) of the support (18) which predefines an inner contour of the support is bonded to the outer skin (16) by way of the boundary layer (20), wherein the material forming the boundary layer (20) is applied to the inner side of the outer skin (16) and then a further polyurethane-comprising material layer forming the core structure (22) is applied to the material forming the boundary layer, wherein the outer skin (16), the boundary layer (20) and the further material layer (22) are then bonded to one another by curing respectively crosslinking the materials used for the boundary layer (20) and the further material layer (22).

## Revendications

1. Procédé pour la fabrication d'une pièce de carrosserie (14) d'un véhicule, notamment d'un toit de véhicule, qui constitue un composant composite qui comprend un panneau extérieur (16) et un support (18), dans lequel procédé, le panneau extérieur (16) est introduit dans un outil et est ensuite assemblé au support (18), un matériau comprenant du polyuréthane étant disposé et réticulé dans un moule d'outil pour réaliser une couche limite (20) au niveau du côté intérieur du panneau extérieur (16) et une structure de noyau (22) du support (18) prédéfinissant le contour intérieur du support étant reliée au panneau extérieur (16) par le biais de la couche limite (20), le matériau constituant la couche limite (20) étant appliqué sur le côté intérieur du panneau extérieur (16) et ensuite une couche de matériau supplémentaire, constituant la structure de noyau (22) et comprenant du polyuréthane, étant appliquée sur le matériau formant la couche limite, le panneau extérieur (16), la couche limite (20) et la couche de matériau supplémentaire (22) étant ensuite assemblés les uns aux autres par durcissement ou réticulation des matériaux utilisés pour la couche limite (20) et la couche de matériau supplémentaire (22).
